## Europäisches Patentamt
## European Patent Office
## Office européen des brevets

(19)

(11) Veröffentlichungsnummer: **0 183 043**
**B1**

(12) **EUROPÄISCHE PATENTSCHRIFT**

(45) Veröffentlichungstag der Patentschrift:
27.09.89

(51) Int. Cl.⁴: **G 01 N 23/207, G 01 N 23/223**

(21) Anmeldenummer: **85113344.7**

(22) Anmeldetag: **21.10.85**

(54) **Einrichtung zur Röntgenanalyse.**

(30) Priorität: 22.10.84 DE 3438637
14.11.84 DE 3441539
25.02.85 DE 3506605

(43) Veröffentlichungstag der Anmeldung:
04.06.86 Patentblatt 86/23

(45) Bekanntmachung des Hinweises auf die Patenterteilung:
27.09.89 Patentblatt 89/39

(84) Benannte Vertragsstaaten:
CH DE FR GB LI NL

(56) Entgegenhaltungen:
EP-A- 0 108 447
US-A- 3 344 274
US-A- 3 440 419
US-A- 4 263 510

PATENT ABSTRACTS OF JAPAN, Band 3, Nr. 22, (E-93)
24. Februar 1979, Seite 57 E 93; & JP - A - 52 65166

(73) Patentinhaber: **Siemens Aktiengesellschaft,
Wittelsbacherplatz 2, D-8000 München 2 (DE)**

(72) Erfinder: **Kraeft, Uwe, Dipl.-Min., Im Hirschmorgen 40,
D-6906 Leimen 1 (DE)**

## Beschreibung

Die Erfindung bezieht sich auf eine Einrichtung zur Röntgenanalyse von Materialproben.

Zur Untersuchung von Materialproben wird sowohl die Röntgenfluoreszenzanalyse (RFA) als auch die Röntgenbeugungsanalyse (RBA) eingesetzt. Für jede Analysenmethode gibt es hochspezialisierte Geräte, die relativ aufwendig sind.

Um beide Analysemethoden in wirtschaftlich vertretbarem Ausmass einsetzen zu können, wurde in der US-A 3 344 274 bereits ein kombiniertes Gerät vorgeschlagen, mit welchem sowohl Röntgenbeugungsanalyse wie auch Röntgenfluoreszenzanalyse durchführbar ist. Für jede Analysenart ist eine Röntgenröhre vorgesehen. Die Strahlengänge der Röntgenröhren stehen senkrecht aufeinander. Es sind dort zwei koaxiale Goniometerkreise vorgesehen, von denen einer den Detektor trägt, der andere wahlweise mit der zu untersuchenden Probe oder einem Analysatorkristall besetzbar ist.

Da der Aufbau der bekannten Einrichtung noch relativ aufwendig ist, besteht die Aufgabe, eine zum automatischen Analysenbetrieb geeignete, einfacher aufgebaute und universeller einsetzbare Einrichtung zu schaffen.

Eine Lösung der Aufgabe wird in Einrichtungen, wie sie in den Ansprüchen gekennzeichnet sind, gesehen.

Mit den getroffenen Anordnungen ist es möglich, mit nur einer Röntgenröhre zur Erzeugung der Primärstrahlung für die beiden Analysenarten auszukommen, die verschwenk- und verschiebbaren Halterungen für Kristalle und Proben erlauben eine automatische Steuerung des Analysenablaufs für RFA und RBA.

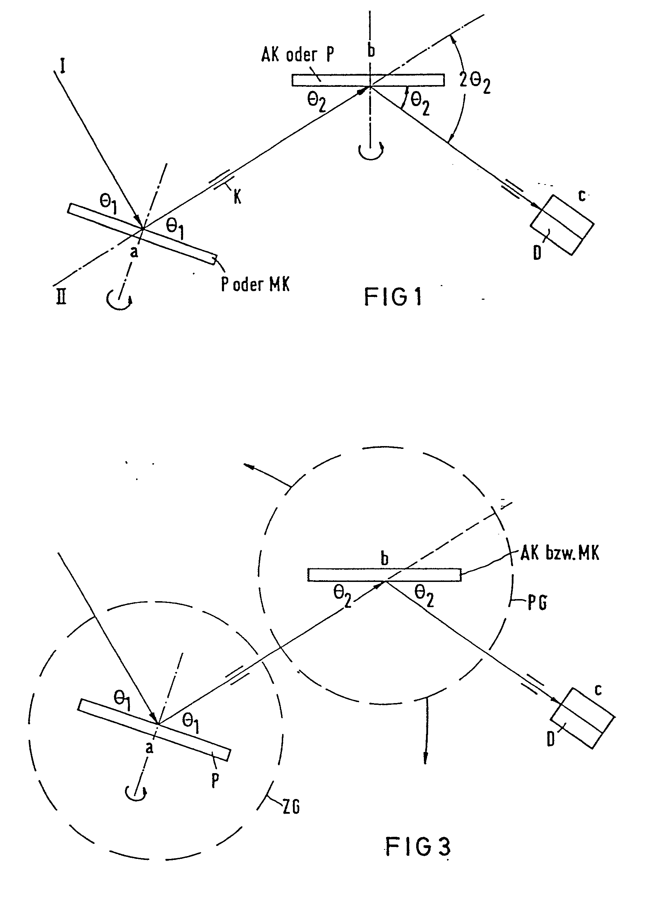

Die Erfindung wird im folgenden anhand einiger in den Figuren 1 bis 3 dargestellter Beispiele näher erläutert.

In der Figur 1 ist der Messstrahlengang einer erfindungsgemässen Einrichtung schematisch dargestellt. Die Positionen a und b liegen jeweils an konzentrisch angeordneten Goniometerkreisen, c bezeichnet die Position des Detektors D. Der Detektor D kann entweder auf einem dritten Goniometerkreis angeordnet sein, oder es wird eine Mehrkanal-Detektoranordnung bzw. ein energiedispersiver Detektor verwendet.

Die als Halterungen ausgebildeten Positionen a und b können wahlweise von Hand oder automatisch mit Analysator- oder Monochromatorkristallen oder Proben besetzt werden.

Zur röntgenspektrometrischen Untersuchung einer Probe wird diese in die Halterung der Position a eingesetzt. Die Halterung in Position a ist auch um ihre horizontale Achse drehbar.

In der Position b befindet sich ein Analysatorkristall AK nach Wahl, welcher mit dem Detektor D um eine gemeinsame vertikale Achse drehbar ist.

Anstelle des schwenkbaren Detektors D können auch eine Reihe von mit Detektoren besetzten Festkanälen oder ein energiedispersives System vorgesehen werden.

Aus einer hier nicht eingezeichneten Strahlungsquelle fällt der Primärstrahl I unter dem Winkel $\Theta_1$ auf die Probe P in Position a. Die in der Probe P enthaltenen Elemente werden dadurch zur Emission ihrer charakteristischen Röntgenfluoreszenzstrahlung angeregt, deren Wellenlängen zur Identifizierung des oder der in der Probe enthaltenen Elemente dienen.

Die von der Probe emittierte Röntgenfluoreszenzstrahlung tritt durch einen Kollimator K auf den in Position b befindlichen Analysatorkristall AK, wo sie gemäss der Bragg'schen Gleichung $n \cdot \lambda = 2d \cdot \sin \Theta$ reflektiert wird. Zu jeder Röntgenlinie mit der Wellenlänge $\lambda$ gehört ein spezifischer Reflexionswinkel $2\Theta$.

Die vom Analysatorkristall AK reflektierte Strahlung wird mit dem Detektor D in Position c gemessen. Der Winkel zwischen seiner Achse und der Strahlrichtung auf die Probe beträgt $2\Theta$.

Mit derselben Einrichtung kann auch eine Röntgenbeugungsanalyse durchgeführt werden. Dazu wird in die Halterung in Position a ein Monochromator-Kristall MK justierbar eingesetzt, welcher den Primärstrahl I monochromatisiert und auf die in der Halterung in Position b angebrachte Probe P lenkt.

Die Probe P in Position b kann um ihre horizontale Achse gedreht und mit dem Detektor D in Position c um eine vertikale Achse in b geschwenkt werden.

Falls für die Röntgenbeugungsanalyse die Röntgenstrahlung durch andere Mittel bereits monochromatisiert ist, kann die Position b mit dem Detektor c so geschwenkt werden, dass der monochrome Primärstrahl II direkt auf die in Position b befindliche Probe fällt, die Position a ist dann nicht besetzt.

Die Detektoren können die Röntgenimpulse an festen und/oder variablen Winkelpositionen $2\Theta$ messen. Im letzteren Fall können die Röntgenimpulse auf einem Schreibstreifen dargestellt und/oder nach Digitalisierung in Abhängigkeit vom Beugungswinkel in einem Computer gespeichert und auf einem Bildschirm gezeigt und/oder mit einem Drucker ausgegeben werden. Durch Einblendung bekannter Wellenlängen für die RFA bzw. bekannter Beugungswinkel oder Netzebenenabstände nach Normalisierung für die RBA können optisch oder mit einem Rechner zusätzlich qualitative Analysen durchgeführt werden. Nach Eichung durch Proben mit bekannten Gehalten sind quantitative Analysen durchführbar.

Zum automatischen Betrieb kann die Einrichtung einen automatischen Probentransport mit Anschluss an einen Präparationsautomaten aufweisen. Über den angeschlossenen Computer können z.B. automatisch eine Justierung des Peak-Maximums, Eichung mit bekanntem Standard und Rekalibrierung mit bekanntem Standard erfolgen. Der Computer besitzt beispielsweise eine serielle Schnittstelle, an die allgemein ein Modem oder speziell ein Akustikkoppler bei einer V.24-Schnittstelle angeschlossen werden kann. Dadurch wird nach Eingabe eines Codes ein externer Zugriff zu der Messeinrichtung über das Telefonnetz in einen externen Computer möglich, von dem Daten übernommen und dargestellt werden können und mit dem auch ausgewählte Operationen gestartet werden können. Alle externen Zugriffe werden im allgemeinen vom Drucker des Gerätes schriftlich festgehalten.

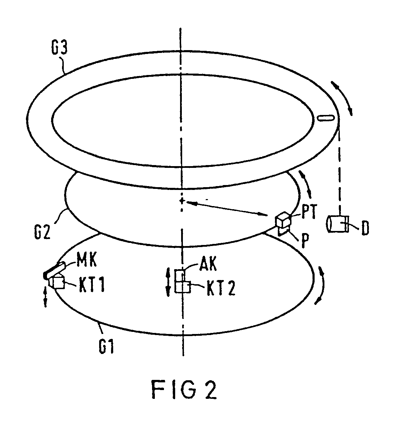

In einer bevorzugten Ausführungsform besitzt die Einrichtung nach Anspruch 1 drei getrennte koaxiale Goniometerkreise, die mit Halterungen für Proben, Monochromator- und/oder Analysatorkristallen und Detektoren versehen sind. Die Goniometerkreise und die mit ihnen verbundenen Positionen und Halterungen sind gegeneinander nach Wahl verdrehbar. Beispielsweise können, wie in Figur 2 dargestellt, auf einem ersten Goniometerkreis G1 die Halterungen als in oder aus dem Messstrahlengang verschwenkbare Kristallträger KT1 ausgebildet sein, in denen wenigstens ein justierbarer Monochromatorkristall MK und/oder ein monochromatisierendes Fluoreszenzpräparat angeordnet sind. Im Zentrum des ersten Goniometerkreises G1 ist ein Analysatorkristall zentral in einem Kristallträger KT2 derart befestigt, dass er in den Messstrahlengang ein- bzw. herausgeschwenkt werden kann.

Auf einem zweiten Goniometerkreis G2 ist mindestens ein Probenhalter PT angeordnet, der vom Rand des Goniometerkreises zu dessen Zentrum radial verschiebbar ist. Der mit der Probe P besetzte Probenhalter PT befindet sich bei der RFA am Rand des zweiten Goniometerkreises G2 und ist dort in den Strahlengang geschwenkt, während er zur Durchführung der RBA in das Zentrum des Goniometerkreises verschoben wird.

Auf einem dritten, die ersten beiden Goniometerkreise umgebenden Goniometerkreis G3 ist wenigstens ein Detektor D angeordnet.

In der Figur 2 sind die koaxialen Goniometerkreise G1, G2, G3 der Übersichtlichkeit halber in axialer Richtung auseinandergezogen dargestellt.

Alle drei Goniometerkreise sind – wie bereits erwähnt – konzentrisch bzw. koaxial angeordnet und voneinander unabhängig in verschiedene Winkelpositionen verschwenkbar, wobei durch die besondere Ausbildung der Halterungen Kristalle, Detektoren und Proben wahl- und wechselweise in den Messstrahlengang für RBA bzw. RFA einbringbar sind. Für die RFA wird eine Kopplung zwischen den ersten Goniometerkreis G1, dem Kristallträgerkreis, und dem dritten Goniometerkreis G3, dem Detektorträger, vorgenommen, während für die RBA eine Kopplung zwischen dem zweiten Goniometerkreis G2 mit dem Probenträger PT und dem dritten Goniometerkreis G3 mit dem Detektor erfolgt.

In einer abgewandelten Ausführungsform befinden sich die manuell oder automatisch auswechselbaren Proben für die RBA bzw. Analysatorkristalle AK für die RFA in Position b (Figur 1) auf einem gemeinsamen Goniometerkreis, um den der Detektor D konzentrisch auf einem weiteren Goniometerkreis mit doppelter Winkelgeschwindigkeit bewegt werden kann.

Die Probe für die RFA bzw. der Monochromator-Kristall für die RBA befinden sich in Position a, die gegenüber den beiden um die Position b rotierenden Goniometerkreise fest ist.

Für die Justierung eines unter dem Winkel $\Theta 1$ beugenden Monochromator-Kristalls können z. B. die Röntgenröhre und die Goniometerkreise relativ gegeneinander um eine vertikale Achse in a gedreht werden, wobei der Monochromator-Kristall um die gleiche Achse gedreht und in die Beugungsposition gebracht wird, oder, es wird bei kleineren Korrekturen lediglich der Kristall um die vertikale Achse in a gedreht und gegebenenfalls der Abstand zu den Kristallen bzw. Proben in Position b verändert. Durch die mögliche Verschiebung der Probe in zwei Positionen bzw. durch die mögliche Verwendung von zwei gleichartigen Proben kann mit derselben Einrichtung RBA und RFA nacheinander durchgeführt bzw. beim Vorhandensein mehrerer Detektoren bzw. Strahlungsquellen kann RBA und RFA gleichzeitig durchgeführt werden.

In einer weiteren, in Figur 3 skizzierten Ausführungsform gemäss Anspruch 2 ist einem ersten zentralen Goniometerkreis ZG ein weiterer Goniometerkreis PG angefügt, der nach ART eines Planeten um diesen bewegbar ist und mit dem angekoppelten Detektor um sein eigenes Zentrum drehbar ist. Auf dem ersten Goniometerkreis ZG ist die Probe P angeordnet, auf dem peripheren Planeten-Goniometerkreis PG mindestens ein Analysator- bzw. Monochromatorkristall AK oder MK.

Die angegebenen Dreh- und Schwenkbewegungen sind relativer Art, so dass beispielsweise die Probe auch ortsfest sein kann, wenn der Röntgenstrahl I bewegt oder geschwenkt werden kann.

Die Probe P in der Position a auf dem zentralen Goniometerkreis ZG ist um den Winkel $\Theta 1$ schwenkbar und um eine horizontale Achse drehbar. In der Position b auf dem Planeten-Goniometerkreis PG wird vorzugsweise ein Kristall eingesetzt, welcher wahlweise als Monochromator- oder Analysator-Kristall verwendbar ist. Die Winkel $\Theta 1$ und $\Theta 2$ sind unabhängig voneinander einstellbar.

Auf diese Weise ist es möglich, ohne Kristall- und Probenwechsel hintereinander RBA und RFA durchzuführen. Für die RFA ist $\Theta 2$ veränderlich, $\Theta 1$ ist fest eingestellt.

Mit der gleichen Konfiguration kann auch RBA durchgeführt werden. Dabei wird $\Theta 2$ fest auf das Maximum der Beugung eingestellt, während $\Theta 1$ veränderlich ist. Der Detektor in c ist in bekannter Weise um eine Achse in b schwenkbar.

**Patentansprüche**

1. Einrichtung zur Röntgenfluoreszenz-(RFA)-und/oder Röntgenbeugungsanalyse-(RBA), bei der zur RFA Primärstrahlung von einem Röntgenstrahler auf eine Probe gerichtet und über Analysatorkristalle auf einen Detektor gelenkt wird oder zur RBA die Primärstrahlung auf eine Probe gerichtet und unter dem jeweiligen Beugungswinkel auf den Detektor reflektiert wird, mit koaxial angeordneten, wahlweise dreh- und einstellbaren Goniometerkreisen, auf denen Halterungen für den Analysatorkristall, für die Probe und für den Detektor angebracht sind, gekennzeichnet durch drei konzentrisch angeordnete Goniometerkreise, wobei der erste Goniometerkreis (G1) an einer Stelle seines Umfangs mit einer Halterung (KT1) für einen Monochromatorkristall und in seinem Zentrum mit einer Halterung (KT2) für den Analysatorkristall (AK) versehen ist, der zweite Goniometerkreis (G2) mit einer in radialer Richtung vom Umfang zum Zentrum verschiebbaren Halterung (PT) für die Probe (T) ausgestattet ist und der dritte Goniometerkreis (G3) den Detektor (D) trägt.

2. Einrichtung zur Röntgenfluoreszenz-(RFA)-und/oder Röntgenbeugungsanalyse-(RBA), bei der zur RFA Primärstrahlung von einem Röntgenstrahler auf eine Probe gerichtet und über Analysatorkristalle auf einen Detektor gelenkt wird oder zur RBA die Primärstrahlung auf eine Probe gerichtet und unter dem jeweiligen Beugungswinkel auf den Detektor reflektiert wird, mit wahlweise dreh- und einstellbaren Goniometerkreisen, auf denen Halterungen für den Analysatorkristall, für die Probe und für den Detektor angebracht sind, dadurch gekennzeichnet, dass um einen ersten Goniometerkreis (ZG) mit Halterungen für mindestens eine Probe (P) ein zweiter Goniometerkreis (PG) nach Art eines Planeten bewegbar ist und mit dem angekoppelten Detektor (D) um seine parallel zu der des ersten Goniometerkreises (ZG) verlaufenden Achse drehbar und mit mindestens einer Halterung für einen Analysator- bzw. Monochromatorkristall (AK oder MK) versehen ist.

3. Einrichtung nach Anspruch 1 oder 2, gekennzeichnet durch horizontal oder vertikal verschieb- oder schwenkbare Halterungen für die Probe (P), Monochromator- (MK) und Analysatorkristalle (AK), derart, dass sie wahlweise in die Messstrahlengänge für die Röntgenfluoreszenzanalyse oder Röntgenbeugungsanalyse einbringbar sind.

4. Einrichtung nach einem der Ansprüche 1 bis 3, dadurch gekennzeichnet, dass die Probe (P) in ihrer Halterung (PT) um ihre horizontale Achse drehbar ist.

5. Einrichtung nach einem der Ansprüche 1 bis 3, dadurch gekennzeichnet, dass der Detektor (D) um Achsen schwenkbar ist, die durch den Mittelpunkt der zu untersuchenden, um eine horizontale Achse drehbaren Probe (P) verlaufen, derart, dass der Detektor (D) aus verschiedenen Raumpositionen auf die Probenoberfläche zielt und dort nach dem jeweilig vorgegebenen Programm oder nach einer Suchroutine die gebeugten Röntgenintensitäten misst.

## Claims

1. Installation for X-ray fluorescence analysis and/or X-ray diffraction analysis, in which, in the case of X-ray fluorescence analysis, primary radiation from an X-ray emitter is directed on to a sample and then, via analyzer crystals, to a detector or, in the case of X-ray diffraction analysis, the primary radiation is directed on to a sample and reflected, at the respective diffraction angle, on to the detector, the installation having coaxial goniometer circles, capable of being rotated and adjusted as selected, on which are mounted holders for the analyzer crystal, the sample and the detector, and being characterized by three concentric goniometer circles, whereby the first goniometer circle (G1) has, at one point on its perimeter, a holder (KT1) for a monochromator crystal and, at its centre, a holder (KT2) for the analyzer crystal (AK), the second goniometer circle (G2) is equipped with a holder (PT) for the sample (P), the holder being such that it can be moved in a radial direction from the perimeter to the centre, and the third goniometer circle (G3) carries the detector (D).

2. Installation for X-ray fluorescence and/or X-ray diffraction analysis in which, in the case of X-ray fluorescence analysis, primary radiation from an X-ray emitter is directed on to a sample and then, via analyzer crystals, on to a detector or, in the case of X-ray diffraction analysis, the primary radiation is directed on to a sample and reflected, at the respective diffraction angle, on to the detector, the installation having goniometer circles which can be rotated and adjusted as selected, on which are mounted holders for the analyzer crystal, the sample and the detector, and characterized in that a second goniometer circle (PG) is capable of movement, in the manner of a planet, around a first goniometer circle (ZG) with holders for at least one sample (P), and can be rotated, with the connected detector (D), around its axis which runs parallel to that of the first goniometer circle (ZG), and is equipped with at least one holder for an analyzer or monochromator crystal (AK or MK).

3. Installation as in Claim 1 or 2, characterized by holders for the sample (P), monochromator (MK) and analyzer crystals (AK), capable of being displaced or swivelled horizontally or vertically, in such a manner that they can be brought into the measurement ray paths for either X-ray fluorescence analysis or X-ray diffraction analysis, as selected.

4. Installation as in any one of Claims 1 to 3, characterized in that the sample (P) can be rotated, in its holder (PT), around its horizontal axis.

5. Installation as in any one of Claims 1 to 3, characterized in that the detector (D) can be swivelled around axes which run through the midpoint of the sample (P) to be examined, which can be rotated around a horizontal axis, in such a manner that the detector (D) is aimed at the surface of the sample from different positions in space, where it measures the diffracted X-ray intensities according to the particular prescribed program or according to a search routine.

## Revendications

1. Dispositif pour réaliser l'analyse par fluorescence des rayons X (RFA) et/ou par diffraction des rayons X (RBA), dans lequel, pour l'analyse RFA, un rayonnement primaire produit par un émetteur de rayons X est dirigé sur un échantillon et est dévié par l'intermédiaire de cristaux analyseurs en direction d'un détecteur ou, pour l'analyse RBA, le rayonnement primaire est dirigé sur un échantillon et est réfléchi sous l'angle de diffraction en direction du détecteur, et comportant des cercles goniométriques montés coaxialement, pouvant au choix être entraînés en rotation et réglés et sur lesquels sont disposés des supports pour le cristal analyseur, pour l'échantillon et pour le détecteur, caractérisé par trois cercles goniométriques montés concentriquement, le premier cercle goniométrique (G1) comportant, au niveau d'un point de son pourtour, un support (KT1) pour un cristal formant monochromateur et, en son centre, un support (KT2) pour le cristal analyseur (AK), le second cercle goniométrique (G2) comportant un support (PT), déplaçable dans la direction radiale depuis la périphérie en direction du centre, pour l'échantillon (T), et le troisième cercle goniométrique (G3) portant le détecteur (D).

2. Dispositif pour réaliser l'analyse par fluorescence des rayons X (RFA) et/ou par diffraction des rayons X (RBA), dans lequel, pour l'analyse RFA, un rayonnement primaire produit par un émetteur de rayons X est dirigé sur un échantillon et est dévié par l'intermédiaire de cristaux analyseurs en direction d'un détecteur ou, pour l'analyse RBA, le rayonnement primaire est dirigé sur un échantillon et est réfléchi sous l'angle de diffraction en direction du détecteur, et comportant des cercles goniométriques, pouvant au choix être entraînés en rotation et réglés et sur lesquels sont disposés des supports pour le cristal analyseur, pour l'échantillon et pour le détecteur, caractérisé par le fait qu'un second cercle goniométrique (PG) peut être déplacé à la manière d'un satellite autour d'un premier cercle goniométrique (ZG) comportant des supports pour au moins un échantillon (P) et peut, conjointement avec le détecteur (D) accouplé, tourner autour de son axe parallèle à celui du premier cercle goniométrique (ZG) et est équipé au moins d'un support pour un cristal analyseur ou un cristal formant monochromateur (AK ou MK).

3. Dispositif suivant la revendication 1 ou 2, caractérisé par des supports déplaçables ou pouvant pivoter horizontalement ou verticalement, pour l'échantillon (P), des cristaux formant monochromateurs (MK) et des cristaux analyseurs (K), de sorte qu'ils peuvent être introduits au choix dans les trajets des rayonnements de mesure pour l'analyse par fluorescence des rayons X ou pour l'analyse par diffraction des rayons X.

4. Dispositif suivant l'une des revendications 1 à 3, caractérisé par le fait que l'échantillon (B) peut être entraîné en rotation autour de son axe horizontal dans son support (PT).

5. Dispositif suivant l'une des revendications 1 à 3, caractérisé par le fait que le détecteur (D) peut pivoter autour d'axes qui passent par le centre de l'échantillon (P) à examiner, qui peut tourner autour d'un axe horizontal, de telle sorte que le détecteur (D) est dirigé, à partir de différentes positions spatiales, sur la surface de l'échantillon et mesure au niveau de cette dernière, les intensités de rayons X diffractées, conformément au programme respectivement prédéterminé ou conformément à un programme de recherche.

FIG 1

FIG 3

FIG 2